# FASCICULE DE BREVET EUROPEEN

(11) **EP 2 715 976 B1**
(45) Date de publication et mention de la délivrance du brevet: **01.04.2015**
(21) Numéro de dépôt: 12725087.6
(22) Date de dépôt: 03.05.2012
(51) Int. Cl.: H04L 12/24, H04L 29/14

(54) **SYSTÈME DOMESTIQUE DE GESTION D'UNE CONNEXION D'ACCÈS A INTERNET**
HAUSHALTSSYSTEM ZUR VERWALTUNG EINER INTERNETZUGANGSVERBINDUNG
HOUSEHOLD SYSTEM FOR MANAGING AN INTERNET ACCESS CONNECTION

(30) Priorité: 26.05.2011 FR 1154572
(43) Date de publication de la demande: 09.04.2014
(73) Titulaire: Voltalis SA, 75008 Paris (FR)
(72) Inventeur: HEINTZ, Bruno, F-75015 Paris (FR); OURY, Jean-Marc, F-75007 Paris (FR); LEFEBVRE DE SAINT GERMAIN, Hugues, F-69110 Sainte-Foy-Lès-Lyon (FR); BIVAS, Pierre, F-78110 Le Vesinet (FR); BINEAU, Mathieu, F-78000 Versailles (FR)
(74) Mandataire: Hervouet, Sylvie
(86) Numéro de dépôt international: PCT/FR2012/050979
(87) Numéro de publication internationale: WO 2012/160283

(56) Documents cités:
- US-A1- 2005 086 385
- US-A1- 2009 245 102

## Description

La présente invention est relative à un système domestique de gestion d'une connexion d'accès au réseau Internet.

Aujourd'hui, une très grande majorité de foyers domestiques des pays développés possède à domicile un équipement de connexion à Internet, et de plus en plus de services de la vie courante, tels que la téléphonie, la réception de la télévision, la recherche d'informations, les achats en lignes ou même des démarches administratives, dépendent directement de la fiabilité de cette connexion Internet.

Or, les coupures d'accès ou les pannes sur les équipements servant à la connexion (modems ADSL, routeurs, réseau de l'opérateur...) ou sur les câbles reliant les équipements restent fréquentes, de l'ordre de plusieurs journées par an, avec des conséquences de plus en plus lourdes pour le confort des utilisateurs.

Document US2005/0086385 représente l'état de la technique antérieure ou une connexion de secours dédiée est utilisée pour rétablir la connexion après l'échec de l'accès principal.

Certains fournisseurs d'accès ont déjà proposé de fournir à leurs clients une clé 3G qui peut servir de relais lorsque le boîtier modem/routeur ADSL auquel est relié le PC domestique échoue dans ses tentatives de connexion à Internet. En pratique, l'utilisateur doit d'abord déclarer à son fournisseur d'accès qu'il a un problème de connexion, puis brancher cette clé sur un port USB prévu à cet effet sur le boîtier modem/routeur correspondant équipant son domicile. L'accès à Internet peut alors s'effectuer par une connexion 3G rendue possible par un modem 3G intégré dans cette clé.

Cette procédure présente un certain nombre d'inconvénients. Elle n'est tout d'abord pas automatique puisque l'utilisateur doit connecter lui-même la clé 3G sur son boîtier modem/routeur lorsqu'il rencontre un problème de connexion. En outre, le fait que l'utilisateur doive déclarer au préalable un problème de connexion par son réseau d'accès principal peut poser problème, notamment si la panne prive l'utilisateur de tout accès extérieur depuis son domicile (communications téléphoniques et Internet simultanément coupées). Par ailleurs, le temps alloué par le fournisseur d'accès pour des sessions Internet par l'intermédiaire de la clé 3G utilisée comme relais est généralement limité à un crédit de connexion correspondant à un montant en octets de données. De plus, la clé 3G étant affectée au même fournisseur d'accès que le boîtier modem/routeur, elle ne permet pas de servir de connexion auxiliaire dans les cas où l'échec de connexion est dû à un problème sur le serveur du fournisseur d'accès. Enfin, cette solution ne s'applique qu'à des architectures de réseaux domestiques dans lequel un PC est relié à un boîtier modem/routeur permettant l'accès à Internet. Ainsi, la clé 3G utilisée comme relais ne permet pas de résoudre les problèmes de connexion rencontrés par d'autres architectures domestiques, telles qu'une connexion directe par un PC équipé d'un modem ADSL intégré.

Il existe ainsi un réel besoin de trouver une solution permettant de donner à un utilisateur, de manière transparente et automatique, la possibilité d'accéder à Internet en cas de problèmes rencontrés sur sa connexion domestique principale, et qui soit facile à implémenter quelle que soit l'architecture de la connexion domestique principale.

La présente invention part du constat que beaucoup de foyers domestiques sont également équipés d'autres systèmes de communication comportant au moins un dispositif ou boîtier capable de communiquer avec l'extérieur par sa propre connexion Internet.

En particulier, la Demanderesse a développé un système de mesure et de modulation en temps réel de la consommation électrique d'une pluralité d'appareils électriques, dont le principe est décrit notamment dans le document WO 2088/017754, et dont les principaux éléments sont représentés schématiquement sur la figure 1. Ce système de mesure comporte au moins un boîtier modulateur 1 sur lequel peuvent être connectés individuellement ou en série sur des boucles de courant, plusieurs appareils électriques 2 (tels que des chauffe-eau, des radiateurs électriques, climatisation...). Le boîtier modulateur 1 est apte à mesurer en temps réel les tensions et les courants consommés par ces appareils électriques 2, et à envoyer périodiquement, par exemple toutes les dix minutes, les mesures à une plateforme externe 3 hébergée par un serveur Internet. Cet envoi périodique des mesures s'effectue par l'intermédiaire d'un modem 4 de communication sans fil intégré dans un boîtier pilote 5 du système, le modem 4 de communication sans fil permettant une connexion 6 à la plateforme Internet 3 de type téléphonie par paquet, tel que le GPRS, la 3G ou la 4G. Le boîtier pilote 5 est préférentiellement distinct du boîtier modulateur 1 et relié à ce dernier par une liaison filaire 7, de préférence par courant porteur ou CPL. Pour ce faire, chacun des boîtiers modulateur 1 et pilote 5 est équipé d'un modem CPL (non représenté). Le boîtier pilote 5 peut ainsi être relié à une pluralité de boîtiers modulateurs 1 dont il collecte les mesures pour envoi à la plateforme externe 3. Le boîtier pilote 5 comporte avantageusement un port USB (non représenté), qui permet d'accepter le branchement de modules complémentaires tels que des modems radio courte portée. Ainsi, on peut prévoir également que la transmission des mesures depuis les boîtiers modulateurs 1 s'effectue par cette voie radiofréquence. Les mesures reçues par la plateforme externe 3 sont stockées et peuvent être visualisées à tout moment et depuis n'importe quel lieu par l'utilisateur qui peut se connecter sur son espace utilisateur sur Internet par tout moyen connu. La plateforme 3 est en outre susceptible d'envoyer au boîtier pilote 5, par la connexion sans fil 6 de type téléphonie par paquet, des ordres pour commander l'interruption de l'alimentation de tout ou partie des appareils électriques 2 reliés aux différents boîtiers modulateurs 1 pendant une durée prédéterminée. Les périodes d'interruption sont généralement inférieures à la demi-heure, de sorte que les utilisateurs concernés par les coupures de tout ou partie de leurs appareils électriques tels que les chauffages ou climatisation ne subissent aucune gêne. L'interruption de l'alimentation s'effectue par l'intermédiaire des boîtiers modulateurs 1. Grâce à ce système, et outre la possibilité de suivi des consommations par chaque utilisateur, on permet de gérer simultanément au niveau de la plateforme centralisée 3 une grande quantité de boîtiers modulateurs 1 et boîtiers pilotes 5 et de moduler plus facilement, à une échelle communale, départementale ou régionale, la puissance électrique consommée par un ensemble d'utilisateurs, en particulier lors de pics de consommation, sans qu'il soit nécessaire pour les fournisseurs d'énergie électrique de produire plus d'électricité.

Aujourd'hui, même si un foyer est équipé d'une part, d'un système de connexion à Internet, et d'autre part, d'un système de mesure et de modulation tel que décrit précédemment, ces deux systèmes coexistent dans le foyer mais n'ont aucune interaction particulière.

La présente invention propose de combiner astucieusement ces deux systèmes pour permettre d'offrir une solution simple et automatique lorsqu'un utilisateur est confronté à un problème d'accès à Internet sur sa connexion principale.

Plus précisément, la présente invention a pour objet un système domestique de gestion d'une connexion d'accès au réseau Internet dans lequel au moins un ordinateur peut accéder à Internet par l'intermédiaire d'une connexion domestique principale, caractérisé en ce que le système comporte des moyens aptes à détecter un échec de connexion au réseau Internet sur ladite connexion domestique principale et à commander un basculement automatique sur une connexion auxiliaire comprenant un boîtier pilote d'un système de mesure et de modulation en temps réel de la consommation électrique d'une pluralité d'appareils électriques, ledit boîtier pilote étant apte à accéder au réseau Internet par l'intermédiaire d'une connexion sans fil de type téléphonie par paquet.

Selon d'autres caractéristiques préférentielles pour la mise en oeuvre de l'invention:
- la connexion domestique principale peut s'effectuer par l'intermédiaire d'un boîtier modem auquel l'ordinateur est relié par une première liaison de communication. Le boîtier modem peut être également un routeur de données ;
- le boîtier modem peut être relié au boîtier pilote par l'intermédiaire d'une deuxième liaison de communication ;
- l'ordinateur peut être relié directement audit boîtier pilote par une troisième liaison de communication ;
- la première liaison de communication et/ou la deuxième liaison de communication et/ou la troisième liaison de communication est de type filaire, notamment une liaison Ethernet ou une liaison par courant porteur de ligne (CPL) ;
- en variante, la première liaison de communication et/ou la deuxième liaison de communication et/ou la troisième liaison de communication est de type radiofréquence à courte portée, notamment une liaison WiFi ou Bluetooth ;
- la connexion sans fil est de type GPRS, 3G ou 4G.
- les moyens de détection et de basculement sont un module logiciel stocké dans une mémoire de l'ordinateur, ou dans une mémoire du boîtier modem, ou dans une mémoire du boîtier pilote.

Différents aspects de l'invention apparaîtront dans la description suivante, faite en référence aux figures annexées, dans lesquelles :
- la figure 1, décrite ci-avant, représente schématiquement un système connu de mesure et de modulation en temps réel d'une pluralité d'appareils électriques;
- la figure 2 illustre schématiquement un système domestique de gestion d'une connexion d'accès au réseau Internet selon une architecture possible conforme à l'invention.

Dans la suite de l'exposé, les éléments communs aux deux figures portent les mêmes références.

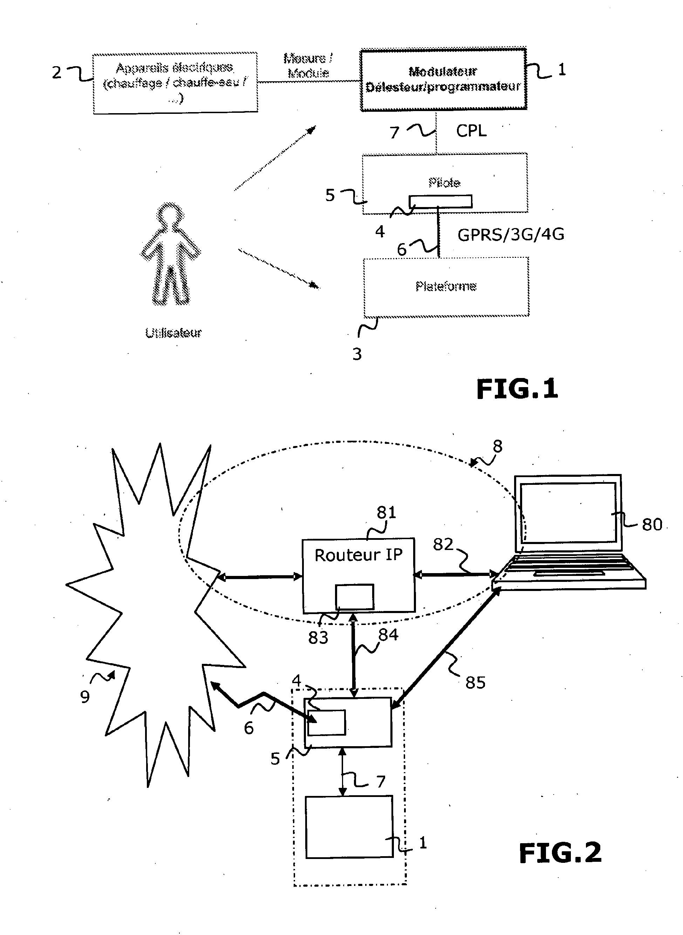

Sur la figure 2 annexée, on a représenté sous la référence 8 un ensemble d'équipements installés au domicile d'un utilisateur, permettant une connexion au réseau Internet 9. Cet ensemble correspond à la connexion domestique principale de l'utilisateur. Dans l'exemple représenté, cette connexion 8 permet à l'utilisateur d'accéder au réseau Internet 9 depuis son PC 80, par l'intermédiaire d'un modem ADSL ou fibre optique 81 auquel l'ordinateur 80 est connecté. La liaison 82 entre l'ordinateur 80 et le modem ADSL ou fibre optique 81 peut être de type filaire, par exemple une liaison de type Ethernet par l'intermédiaire d'un câble RJ-45, ou de type courant porteur de ligne. En variante, si l'ordinateur 80 et le modem ADSL le permettent, la liaison 82 peut être de type radiofréquence courte portée, par exemple du type WiFi ou Bluetooth. Le modem ADSL 81 peut avantageusement avoir une fonction de routeur de manière à permettre la connexion simultanée d'une pluralité d'équipements (PC portable ou non, PDA, tablettes ou équipements téléphoniques intelligents, télévision...) et offrir un service dit « triple play » comprenant l'accès à haut débit à Internet, la téléphonie en voix sur IP et la télévision.

Selon l'invention, on retrouve en outre, comme composante du système domestique de gestion d'une connexion à Internet, la partie d'équipements du système de mesure et de modulation en temps réel d'une pluralité d'appareils électriques décrit précédemment, située dans le foyer domestique de l'utilisateur, et en particulier le ou les boîtiers modulateurs 1 (dont un seul est représenté sur la figure) et le boîtier pilote 5. Comme vu précédemment, ce boîtier pilote 5 est doté d'un modem 4 lui permettant d'établir une connexion 6 sans fil de type téléphonie par paquet, selon un protocole tel que le GPRS, la 3G ou la 4G, dans le but de transmettre des données de mesure à une plateforme centralisée 3 (voir figure 1) hébergée par un serveur Internet et de recevoir des commandes de coupures. Dans un tel système, le boîtier pilote 1 est généralement paramétré pour permettre uniquement une connexion automatique du boîtier pilote 5 à la plateforme centralisée 3 au moment de la transmission des données de mesures, en utilisant la connexion sans fil 6, et ce, de manière totalement transparente pour l'utilisateur.

Ici, et conformément à l'invention, la connexion 6 sans fil offerte par le boîtier pilote 5 va être utilisée comme connexion auxiliaire d'accès au réseau Internet 9 en cas de défaut sur la connexion domestique principale 8. Pour ce faire, le système de gestion de l'invention comporte des moyens aptes à détecter un échec de connexion au réseau Internet 9 sur la connexion domestique principale 8 et à commander un basculement automatique sur la connexion auxiliaire 6. Les moyens sont typiquement un module logiciel 83 stocké dans la mémoire du modem 81, comme illustré sur la figure 2, de manière à être chargé et exécuté par le microprocesseur de ce modem 81. Le module logiciel 83 peut néanmoins être implémenté au niveau du PC 80 et/ou au niveau du boîtier pilote 5.

Ainsi, dans l'architecture représentée sur la figure 2, c'est le modem 81, grâce au module logiciel 83, qui détecte un échec de connexion au réseau Internet 9 par la connexion domestique principale 8 en mesurant la ligne ADSL ou en détectant une absence de trafic sur la connexion au bout d'une période prédéterminée suivant une tentative de connexion. En cas de détection d'un échec de connexion, ou de plusieurs tentatives de connexion sans succès, le module logiciel 83 commande alors le basculement de la connexion sur la connexion auxiliaire 6 offerte par le boîtier pilote 5. Le modem 81 est avantageusement relié au boîtier pilote 5 par l'intermédiaire d'une liaison 84 filaire, par exemple une liaison de type Ethernet par l'intermédiaire d'un câble RJ-45, ou de type courant porteur de ligne. En variante, la liaison 84 est une liaison sans fil courte portée, de type Bluetooth, ZigBee ou WiFi. Pour ce type d'architecture, les données entre le PC 80 et le réseau Internet 9 transiteront alors par la liaison 82, le modem 81, et le modem 6 du boîtier pilote 5.

En variante ou en parallèle, le PC 80 peut également être connecté au boîtier pilote 5 par une liaison 85. Ici encore, la liaison 85 peut être filaire, par exemple une liaison de type Ethernet par l'intermédiaire d'un câble RJ-45, ou de type courant porteur. Ceci est rendu possible du fait que le boîtier pilote est équipé d'un port Ethernet et d'un modem CPL pour sa connexion avec les boîtiers de mesure 1. La liaison 85 peut être également une liaison sans fil courte portée, de type Bluetooth, ZigBee ou WiFi. Ceci est rendu possible par le fait que le boîtier pilote 5 comporte un port USB sur lequel différents modules radiofréquences peuvent être connectés.

Il est également possible, comme indiqué ci-avant, que le module logiciel 83 soit chargé non pas dans le routeur 81, mais au niveau du PC 80. Une implémentation du module logiciel sur le PC sera préférée dans la mesure où cela permet de s'affranchir d'une éventuelle panne au niveau du routeur. Dans ce cas, les données entre le PC 80 et le réseau Internet 9 transiteront alors de préférence par la liaison directe 85 entre le PC et le boîtier pilote 5. Cette solution sera adoptée en outre dans tous les cas où la connexion principale d'accès à Internet s'effectue sans modem routeur 81, à partir d'un PC doté d'un modem ADSL intégré.

On peut aussi envisager de placer le module logiciel 83 au niveau de l'intelligence du boîtier pilote 5. Dans ce cas, les données entre le PC 80 et le réseau Internet 9 transiteront alors de préférence par la liaison directe 85 entre le PC et le boîtier pilote 5, ce dernier choisissant de les diriger vers le modem routeur 81 si aucun problème d'accès par la connexion domestique principale n'est détecté, ou de basculer sur la connexion auxiliaire 6 dans le cas contraire.

Grâce à l'invention, l'utilisateur dispose d'une connexion auxiliaire qui peut être implémentée très facilement, et ce, quelle que soit l'architecture de départ de sa connexion principale.

Bien entendu, le module logiciel 83 peut également être apte à commander un nouveau basculement vers la connexion domestique principale dès lors que celle-ci devient à nouveau opérationnelle. En variante, il faudra attendre une nouvelle session de connexion pour tester à nouveau la connexion principale, et choisir automatiquement, selon les cas, l'accès, à Internet par la connexion principale ou par la connexion auxiliaire.

## Revendications

1. Système domestique de gestion d'une connexion d'accès au réseau Internet (9) dans lequel au moins un ordinateur (80) peut accéder au réseau Internet (9) par l'intermédiaire d'une connexion domestique principale (8), **caractérisé en ce que** le système comporte des moyens (83) aptes à détecter un échec de connexion au réseau Internet (9) sur ladite connexion domestique principale (8) et à commander un basculement automatique sur une connexion auxiliaire comprenant un boîtier pilote (5) d'un système de mesure et de modulation en temps réel de la consommation électrique d'un pluralité d'appareils (2) électriques, ledit boîtier pilote (5) étant adapté à accéder au réseau Internet (9) par l'intermédiaire d'une connexion (6) sans fil de type téléphonie par paquet.

2. Système domestique de gestion d'une connexion d'accès au réseau Internet (9) selon la revendication 1, **caractérisé en ce que** la connexion domestique principale (8) s'effectue par l'intermédiaire d'un boîtier modem (81) auquel l'ordinateur (80) est relié par une première (82) liaison de communication.

3. Système domestique de gestion d'une connexion d'accès au réseau Internet (9) selon la revendication 2, **caractérisé en ce que** ledit boîtier modem (81) est également un routeur de données.

4. Système domestique de gestion d'une connexion d'accès au réseau Internet (9) selon l'une quelconque des revendications 2 ou 3, **caractérisé en ce que** ledit boîtier modem (81) est relié au boîtier pilote (5) par l'intermédiaire d'une deuxième (84) liaison de communication.

5. Système domestique de gestion d'une connexion d'accès au réseau Internet (9) selon l'une quelconque des revendications précédentes, **caractérisé en ce que** ledit ordinateur (80) est relié directement audit boîtier pilote (5) par une troisième (85) liaison de communication.

6. Système domestique de gestion d'une connexion d'accès au réseau Internet (9) selon l'une quelconque des revendications 2 à 5, **caractérisé en ce que** ladite première (82) liaison de communication et/ou ladite deuxième (84) liaison de communication et/ou ladite troisième (85) liaison de communication est de type filaire, notamment une liaison Ethernet ou une liaison par courant porteur de ligne.

7. Système domestique de gestion d'une connexion d'accès au réseau Internet (9) selon l'une quelconque des revendications précédentes, **caractérisé en ce que** ladite première (82) liaison de communication et/ou ladite deuxième (84) liaison de communication et/ou ladite troisième (85) liaison de communication est de type radiofréquence à courte portée, notamment une liaison WiFi ou Bluetooth.

8. Système domestique de gestion d'une connexion d'accès au réseau Internet (9) selon l'une quelconque des revendications précédentes, **caractérisé en ce que** ladite connexion (6) sans fil est de type GPRS, 3G ou 4G.

9. Système domestique de gestion d'une connexion d'accès au réseau Internet (9) selon l'une quelconque des revendications précédentes, **caractérisé en ce que** lesdits moyens (83) sont un module logiciel stocké dans une mémoire de l'ordinateur (80).

10. Système domestique de gestion d'une connexion d'accès au réseau Internet (9) selon l'une quelconque des revendications 2 à 8, **caractérisé en ce que** lesdits moyens (83) sont un module logiciel stocké dans une mémoire du boîtier modem (81) ou du boîtier pilote (5).

## Patentansprüche

1. Haushaltssystem zur Verwaltung einer Internetzugangsverbindung (9), wobei mindestens ein Rechner (80) auf das Internet-Netzwerk (9) über eine Haushaltshauptverbindung (8) zugreifen kann, **dadurch gekennzeichnet, dass** das System Mittel (83) aufweist, die imstande sind, einen Verbindungsfehler mit dem Internet-Netzwerk (9) über die Haushaltshauptverbindung (8) festzustellen und eine automatische Umschaltung auf eine Hilfsverbindung zu befehlen, die einen Steuerkasten (5) eines Echtzeit-Mess- und Modulationssystems des Stromverbrauchs einer Vielzahl von elektrischen Geräten (2) umfasst, wobei der Steuerkasten (5) ausgebildet ist, um auf das Internet-Netzwerk (9) über eine drahtlose Verbindung (6) vom Typ Paket-Telefonie zuzugreifen.

2. Haushaltssystem zur Verwaltung einer Internetzugangsverbindung (9) nach Anspruch 1, **dadurch gekennzeichnet, dass** die Haushaltshauptverbindung (8) über einen Modemkasten (81) hergestellt wird, mit dem der Rechner (80) über eine erste Kommunikationsverbindung (82) verbunden ist.

3. Haushaltssystem zur Verwaltung einer Internetzugangsverbindung (9) nach Anspruch 2, **dadurch gekennzeichnet, dass** der Modemkasten (81) ebenfalls ein Datenrouter ist.

4. Haushaltssystem zur Verwaltung einer Internetzugangsverbindung (9) nach einem der Ansprüche 2 oder 3, **dadurch gekennzeichnet, dass** der Modemkasten (81) mit dem Steuerkasten (5) über eine zweite Kommunikationsverbindung (84) verbunden ist.

5. Haushaltssystem zur Verwaltung einer Internetzugangsverbindung (9) nach einem der vorangehenden Ansprüche, **dadurch gekennzeichnet, dass** der Rechner (80) mit dem Steuerkasten (5) über eine dritte Kommunikationsverbindung (85) direkt verbunden ist.

6. Haushaltssystem zur Verwaltung einer Internetzugangsverbindung (9) nach einem der Ansprüche 2 bis 5, **dadurch gekennzeichnet, dass** die erste Kommunikationsverbindung (82) und/oder die zweite Kommunikationsverbindung (84) und/oder die dritte Kommunikationsverbindung (85) vom drahtgebundenen Typ, insbesondere eine Ethernet-Verbindung oder eine PLC-Verbindung, ist.

7. Haushaltssystem zur Verwaltung einer Internetzugangsverbindung (9) nach einem der vorangehenden Ansprüche, **dadurch gekennzeichnet, dass** die erste Kommunikationsverbindung (82) und/oder die zweite Kommunikationsverbindung (84) und/oder die dritte Kommunikationsverbindung (85) vom Typ Funkfrequenz mit kurzer Reichweite, insbesondere eine WLAN- oder Bluetooth-Verbindung, ist.

8. Haushaltssystem zur Verwaltung einer Internetzugangsverbindung (9) nach einem der vorangehenden Ansprüche, **dadurch gekennzeichnet, dass** die drahtlose Verbindung (6) vom Typ GPRS, 3G oder 4G ist.

9. Haushaltssystem zur Verwaltung einer Internetzugangsverbindung (9) nach einem der vorangehenden Ansprüche, **dadurch gekennzeichnet, dass** die Mittel (83) ein Softwaremodul sind, das in einem Speicher des Rechners (80) gespeichert ist.

10. Haushaltssystem zur Verwaltung einer Internetzugangsverbindung (9) nach einem der Ansprüche 2 bis 8, **dadurch gekennzeichnet, dass** die Mittel (83) ein Softwaremodul sind, das in einem Speicher des Modemkastens (81) oder des Steuerkastens (5) gespeichert ist.

## Claims

1. A household system for managing an Internet access connection (9) wherein at least one computer (80) can access the Internet (9) via a main household connection (8), **characterized in that** the system comprises means (83) able to detect a failed connection to the Internet (9) on said main household connection (8) and to control an automatic switch-over to an auxiliary connection comprising a driver package (5) of a system for real-time measurement and modulation of the electricity consumption of a plurality of electrical apparatuses (2), said driver package (5) being suitable for accessing the Internet (9) via a wireless telephone packet-type connection (6).

2. The household system for managing an Internet access connection (9) according to claim 1, **characterized in that** the main household connection (8) is done through a modem package (81) to which the computer (80) is connected by a first (82) communication link.

3. The household system for managing an Internet access connection (9) according to claim 2, **characterized in that** said modem package (81) is also a data router.

4. The household system for managing an Internet access connection (9) according to any one of claims 2 or 3, **characterized in that** said modem package (81) is connected to the driver package (5) by means of a second communication link (84).

5. The household system for managing an Internet access connection (9) according to any one of the preceding claims, **characterized in that** said computer (80) is directly connected to said driver package (5) by a third (85) communication link.

6. The household system for managing an Internet access connection (9) according to any one of claims 2 to 5, **characterized in that** said first (82) communication link and/or said second (84) communication link and/or said third (85) communication link is of the wired type, in particular an Ethernet link and/or a power-line communication link.

7. The household system for managing an Internet access connection (9) according to any one of the preceding claims, **characterized in that** said first (82) communication link and/or said second (84) communication link and/or said third (85) communication link is of the short-range radiofrequency type, in particular a WiFi or Bluetooth link.

8. The household system for managing an Internet access connection (9) according to any one of the preceding claims, **characterized in that** said wireless connection (6) is of the GPRS, 3G or 4G type.

9. The household system for managing an Internet access connection (9) according to any one of the preceding claims, **characterized in that** said means (83) are a software module stored in a memory of the computer (80).

10. The household system for managing an Internet access connection (9) according to any one of claims 2 to 8, **characterized in that** said means (83) are a software module stored in a memory of the modem package (81) or the driver package (5).
